# EUROPEAN PATENT APPLICATION

(11) **EP 4 250 254 A1**
(43) Date of publication of application: **27.09.2023**
(21) Application number: 23161767.1
(22) Date of filing: 14.03.2023
(51) Int. Cl.: G06V 20/56

(54) **FAST SENSOR FUSION FOR FREE SPACE DETECTION**

(30) Priority: 21.03.2022 US 202217655677
(71) Applicant: Volvo Car Corporation, 405 31 Göteborg (SE)
(72) Inventor: LI, Ying, 40531 Göteborg (SE); DING, Sihao, 40531 Göteborg (SE)
(74) Representative: Maiwald GmbH

(57) **Abstract**

Systems, devices, computer-implemented methods, and/or computer program products that can facilitate free space detection using fast sensor fusion are provided. In one example, a system can comprise a processor that executes computer executable components stored in memory. The computer executable components can comprise a threshold component, a pixel fusion component, and a frame control component. The threshold component can update the count of a plurality of pixel counters based on confidence scores of at least one camera and at least one sensor in a single pixel. The pixel fusion component can perform sensor fusion on the confidence scores based on a determination that the count of the plurality of pixel counters is less than a defined threshold. The frame control component can bypass the sensor fusion on the confidence scores based on a determination that the count of the plurality of pixel counters is greater than a defined threshold.

## Description

### BACKGROUND

One or more embodiments herein relate to computing devices, and more specifically, to systems, devices, computer-implemented methods, and/or computer program products that can facilitate free space detection using fast sensor fusion.

### SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, systems, computer-implemented methods, and/or computer program products that can facilitate event extraction from heterogeneous data sources are described.

According to an embodiment, a system can comprise a memory that stores computer executable components and a processor that executes the computer executable components stored in the memory. The computer executable components can comprise a threshold component, a pixel fusion component, and a frame control component. The threshold component can update the count of a plurality of pixel counters based on confidence scores of at least one camera and at least one sensor in a single pixel, where the confidence scores can be indicative of confidences associated with a probability map of a free space detection. The pixel fusion component can perform sensor fusion on the confidence scores based on a determination that the count of the plurality of pixel counters is less than a defined threshold. The frame control component can bypass the sensor fusion on the confidence scores based on a determination that the count of the plurality of pixel counters is greater than a defined threshold. According to another embodiment, a computer-implemented method or a computer program product can facilitate free space detection similar to the aforementioned system.

### DESCRIPTION OF THE DRAWINGS

FIG. 1 illustrates a block diagram of an example, non-limiting system that can facilitate free space detection in accordance with one or more embodiments described herein.
FIG. 2 illustrates a block diagram of an example, non-limiting system that can facilitate free space detection in accordance with one or more embodiments described herein.
FIG. 3 illustrates an example, non-limiting system that can facilitate free space detection in accordance with one or more embodiments described herein.
FIG. 4 illustrates a block diagram of an example, non-limiting aspect of a system that can facilitate free space detection in accordance with one of more embodiments described herein.
FIG. 5 illustrates a flow diagram of an example, non-limiting computer-implemented method that can facilitate free space detection in accordance with one or more embodiments described herein.
FIG. 6 illustrates a block diagram of an example, non-limiting computing environment in which one or more embodiments described herein can be facilitated.
FIG. 7 illustrates a block diagram of an example, non-limiting networking environment in which one or more embodiments described herein can be implemented.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

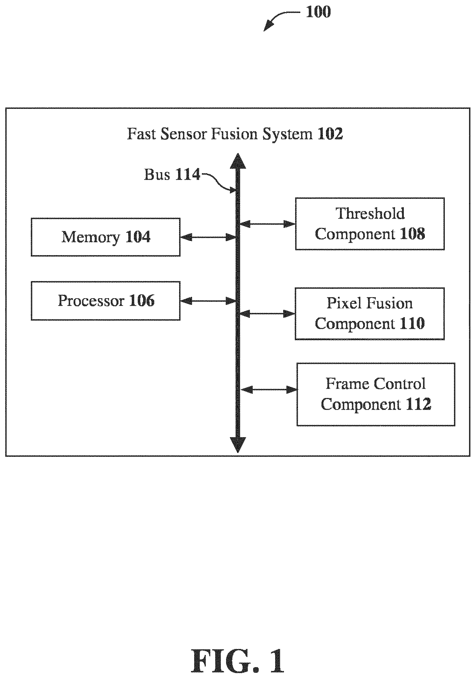

FIG. 1 illustrates a block diagram of an example, non-limiting system 100 that can facilitate free space detection, in accordance with one or more embodiments described herein. In some embodiments, system 100 can comprise a fast sensor fusion system 102. The fast sensor fusion system 102 can comprise memory 104, processor 106, threshold component 108, pixel fusion component 110 and/or frame control component 112. In various embodiments, one or more of the memory 104, processor 106, threshold component 108, pixel fusion component 110 and/or frame control component 112 can be electrically, operatively and/or communicatively coupled to one another. The threshold component 108, the pixel fusion component 110 and/or the frame control component 112 can be operatively coupled to a vehicle to facilitate free space detection for reduction of collisions by the vehicle.

Memory 104 can store one or more computer-executable components and can be operably coupled to processor 106. Processor 106 can execute the one or more computer-executable components. In various embodiments, the one or more computer-executable components can be stored in memory 104 or one or more other storage locations (not shown) accessible to processor 106. As shown in FIG. 1, the one or more computer-executable components can include threshold component 108, pixel fusion component 110 and/or frame control component 112.

Threshold component 108 can update the count of a plurality of pixel counters based on confidence scores of at least one camera and at least one sensor in a single pixel, where the confidence scores can be indicative of confidences associated with a probability map of a free space detection. The threshold component 108 can comprise the plurality of pixel counters. The plurality of pixel counters can be used to filter the confidence scores of the at least one camera and the at least one sensor based on a confidence range to determine whether to update the count of the plurality of pixel counters. The sensor can be ultrasonic sensor, RADAR sensor, LIDAR sensor or infrared sensor.

In some embodiments, the confidence scores of the at least one camera and the at least one sensor can be inputted into the threshold component 108. The confidence scores can be a numerical value between zero and one. The confidence scores can be associated with a probability map of a free space detection. In some embodiments, when the confidence score is closer to one, the pixel can be detected as a free space for that frame. When the confidence score is closer to zero, the pixel can be detected as an occupied space for that frame. When the confidence score is closer to the middle (0.5), the pixel can be detected as uncertain for that frame.

In some embodiments, once the first pixel counter is updated in the threshold component 108, the second pixel counter cannot be updated. When the second pixel counter is updated in the threshold component 108, the first pixel counter cannot be updated.

Pixel fusion component 110 can perform sensor fusion on the confidence scores based on a determination that the count of the plurality of pixel counters is less than a defined threshold. In some embodiments, when the first pixel counter is activated, that number can be sent to the pixel fusion component 110. When the first pixel counter is less than the defined threshold, the pixel fusion component 110 can perform sensor fusion on the confidence scores for that frame. When the first pixel counter is greater than the defined threshold, the pixel fusion component 110 can refrain from performing sensor fusion on the confidence scores for that frame. In some embodiments, when the second pixel counter is activated, that number can be sent to the pixel fusion component 110. When the second pixel counter is less than the defined threshold, the pixel fusion component 110 can perform sensor fusion on the confidence scores for that frame. When the second pixel counter is greater than the defined threshold, the pixel fusion component 110 can refrain from performing sensor fusion on the confidence scores for that frame.

Frame control component 112 can bypass the sensor fusion on the confidence scores based on a determination that the count of the plurality of pixel counters is greater than a defined threshold. In some embodiments, when the first pixel counter is greater than the defined threshold, the frame control component 112 can bypass the sensor fusion on the confidence scores for that frame and send the confidence scores to the next frame. When the first pixel counter remains greater than the defined threshold for the successive frames, the frame control component 112 can continue to bypass the sensor fusion on the confidence scores for those successive frames. In some embodiments, when the second pixel counter is greater than the defined threshold, the frame control component 112 can bypass the sensor fusion on the confidence scores for that frame and send the confidence scores to the next frame. When the second pixel counter remains greater than the defined threshold for the successive frames, the frame control component 112 can continue to bypass the sensor fusion on the confidence scores for those successive frames.

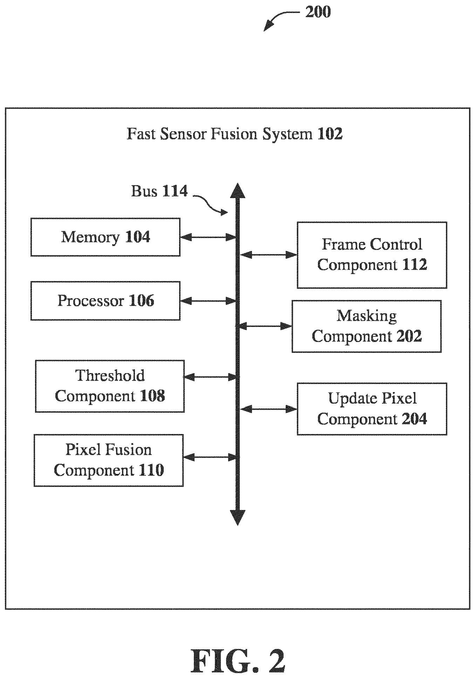

FIG. 2 illustrates a block diagram of an example, non-limiting system 200 that can facilitate free space detection in accordance with one or more embodiments described herein. In some embodiments, system 200 can comprise fast sensor fusion system 102. The fast sensor fusion system 102 can comprise a masking component 202 and/or an update pixel component 204. In various embodiments, masking component 202 and/or update pixel component 204 can be electrically, operatively and/or communicatively coupled to one another. Repetitive description of like elements and/or processes employed in respective embodiments is omitted for sake of brevity.

Masking component 202 can generate the confidence scores of the at least one camera and the at least one sensor from binary masks of camera data and sensed data, where the at least one camera and the at least one sensor generate the camera data and the sensed data, respectively. In various embodiments, the masking component 202 can provide the probability map of whether the single pixel is a free space or occupied. The masking component 202 can receive inputted data from the free space detection algorithms of the at least one camera and the at least one sensor. The camera data and the sensed data can be masked so the data can be set to black and white, where white can indicate "free space" and black can indicate "occupied". The correspondent image areas (or the black spaces) can be given a pixel value set to zero and the surrounding areas (or the white spaces) can be given a pixel value set to one. The masking component 202 can take the pixel values from the camera data and the sensed data and generate confidence scores of the at least one camera and the at least one sensor. The masking component 202 can generate the confidence scores by performing one or more image processing or signal processing algorithms, such as a deep neural network.

Update pixel component 204 can fuse two or more of the confidence scores into a new confidence score of the single pixel. In some embodiments, when the pixel fusion component 110 performs sensor fusion on the confidence scores for that frame, the update pixel component 204 can fuse the two or more confidence scores into one new confidence score of the single pixel. The update pixel component 204 can update an initial confidence by its current observation. The update pixel component 204 can use an algorithm (e.g., Kalman filter) to fuse the two or more confidence scores in the single pixel.

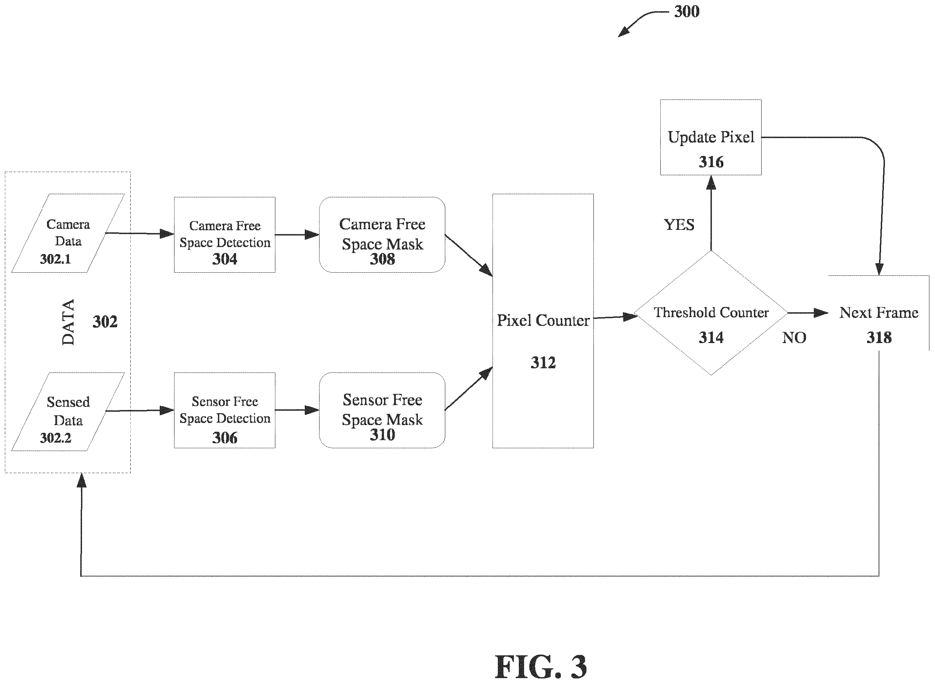

FIG. 3 illustrates an example, non-limiting system 300 that can facilitate free space detection in accordance with one or more embodiments described herein. In some embodiments, data 302 can be inputted into a free space detection component. The camera data 302.1 can be inputted into the camera free space detection 304. The sensed data 302.2 can be inputted into the sensor free space detection 306. The camera free space detection 304 and the sensor free space detection 306 can generate a two-dimensional matrix image, where each pixel of the image is the probability of the pixel being occupied. The probability from the camera free space detection 304 can be inputted into the camera free space mask 308 to generate a confidence score of the camera. The probability from the sensor free space detection 306 can be inputted into the sensor free space mask 310 to generate a confidence score of the sensor. The masking component 202 can include the camera free space mask 308 and the sensor free space mask 310. The confidence scores of the camera and the sensor from their respective free space masks can be inputted into the pixel counter 312. The pixel counter 312 can sort the confidence scores of the camera and the sensor into one of three confidence ranges based on a free space limit and/or an occupied limit. The threshold component 108 can include the pixel counter 312 to generate the output count. The pixel counter 312 can include a plurality of pixel counters to update based on the confidence scores of the camera and the sensor. Threshold counter 314 can compare the output count of the plurality of pixel counters from the pixel counter 312 to a defined threshold count. In some embodiments, when the output count of the plurality of pixel counters from the pixel counter 312 is less than the defined threshold count, the confidence scores of the camera and the sensor can be inputted into the update pixel 316. The pixel fusion component 110 can include the update pixel 316, which can perform a sensor fusion to fuse the confidence scores of the camera and the sensor into a new confidence score using a filtering process, like the Kalman filter process. The new confidence score can be used to predict the next frame 318. When the output count of the plurality of pixel counters from the pixel counter 312 is greater than the defined threshold count, the confidence scores of the camera and the sensor can bypass the update pixel 316 and continue to the next frame 318 through the frame control component 112.

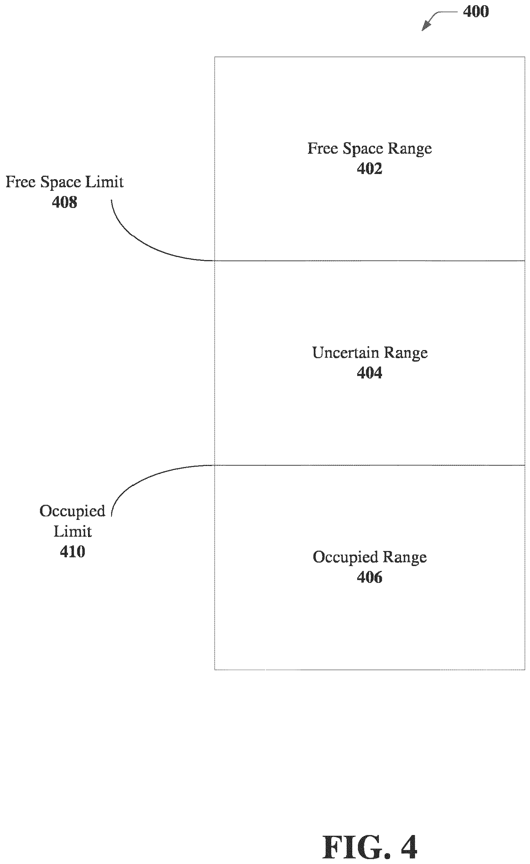

FIG. 4 illustrates a block diagram of an example, non-limiting aspect of a system that can facilitate free space detection in accordance with one of more embodiments described herein. The threshold component 108 can include a confidence range 400 to determine whether to update the count of the plurality of pixel counters. The confidence range 400 can be performed by algorithms. The confidence range 400 can include a free space range 402, an uncertain range 404 and/or an occupied range 406. The three ranges can be developed based on the numerical values of two thresholds, a free space limit 408 and an occupied limit 410. The confidence range 400 filters the confidence scores of the at least one camera and the at least one sensor into one of the three ranges. In various embodiments, when the confidence score is greater than the free space limit 408, the confidence score can be placed into the free space range 402. When the confidence score is less than the occupied limit 410, the confidence score can be placed in the occupied range 406. When the confidence score is between the occupied limit 410 and the free space limit 408, the confidence score can be placed in the uncertain range 404.

In some embodiments, when the confidence scores of the at least one camera and the at least one sensor are greater than the free space limit 408, or in the free space range 402, the first pixel counter can be updated for that frame. When the confidence scores are still greater than the free space limit 408 in the next frame, the first pixel counter can be updated again. In some embodiments, the first pixel counter can continue to be updated for successive frames, as long as the confidence scores remain greater than the free space limit 408. When at least one of the confidence scores is less than the free space limit 408 in a successive frame, the first pixel counter can be reset to zero.

In some embodiments, when the confidence scores of the at least one camera and the at least one sensor are less than the occupied limit 410, or in the occupied range 406, the second pixel counter can be updated for that frame. When the confidence scores are still less than the occupied limit 410 in the next frame, the second pixel counter can be updated again. In some embodiments, the second pixel counter can continue to be updated for successive frames, as long as the confidence scores remain less than the occupied limit 410. When at least one of the confidence scores is greater than the occupied limit 410 in a successive frame, the second pixel counter can be reset to zero.

In some embodiments, the free space limit 408 or the occupied limit 410 can be set to the same value for the confidence scores of the at least one camera and the at least one sensor. The free space limit 408 or the occupied limit 410 can be set to different values for the confidence scores of the at least one camera and the at least one sensor. In some embodiments, the free space limit 408 or the occupied limit 410 can be changed from one frame to the next. In some embodiments, when any of the confidence scores of the at least one camera and the at least one sensor are in the uncertain range 404, neither the first pixel counter nor the second pixel counter can be updated. When the confidence scores of the at least one camera and the at least one sensor are in different ranges, neither the first pixel counter nor the second pixel counter can be updated.

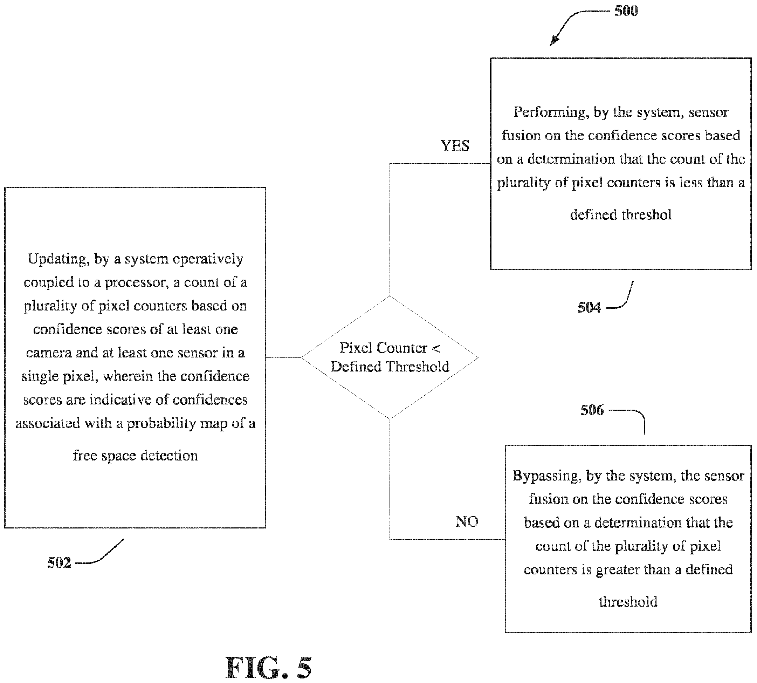

FIG. 5 illustrates a flow diagram of an example, non-limiting computer-implemented method 500 that can facilitate free space detection in accordance with one or more embodiments described herein.

At 502, computer-implemented method 500 can comprise updating, by a system (e.g., via fast sensor fusion system 102 and/or threshold component 108) operatively coupled to a processor (e.g., processor 106, a quantum processor, etc.), a count of a plurality of pixel counters based on confidence scores of at least one camera and at least one sensor (e.g. ultrasonic, RADAR, LIDAR, infrared, etc.) in a single pixel, wherein the confidence scores are indicative of confidences associated with a probability map of a free space detection.

At 504, computer-implemented method 500 can comprise performing, by the system (e.g., via fast sensor fusion system 102 and/or pixel fusion component 110), sensor fusion on the confidence scores based on a determination that the count of the plurality of pixel counters is less than a defined threshold.

At 506, computer-implemented method 500 can comprise bypassing, by the system (e.g., via fast sensor fusion system 102 and/or frame control component 112), the sensor fusion on the confidence scores based on a determination that the count of the plurality of pixel counters is greater than a defined threshold.

In some embodiments, computer-implemented method 500 can comprise generating, by the system (e.g., via fast sensor fusion system 102 and/or masking component 202), the confidence scores of the at least one camera and the at least one sensor from binary masks of camera data and sensed data, wherein the at least one camera and the at least one sensor generate the camera data and the sensed data, respectively.

In some embodiments, computer-implemented method 500 can comprise fusing, by the system (e.g., via fast sensor fusion system 102 and/or update pixel component 204), two or more of the confidence scores into a new confidence score of the single pixel.

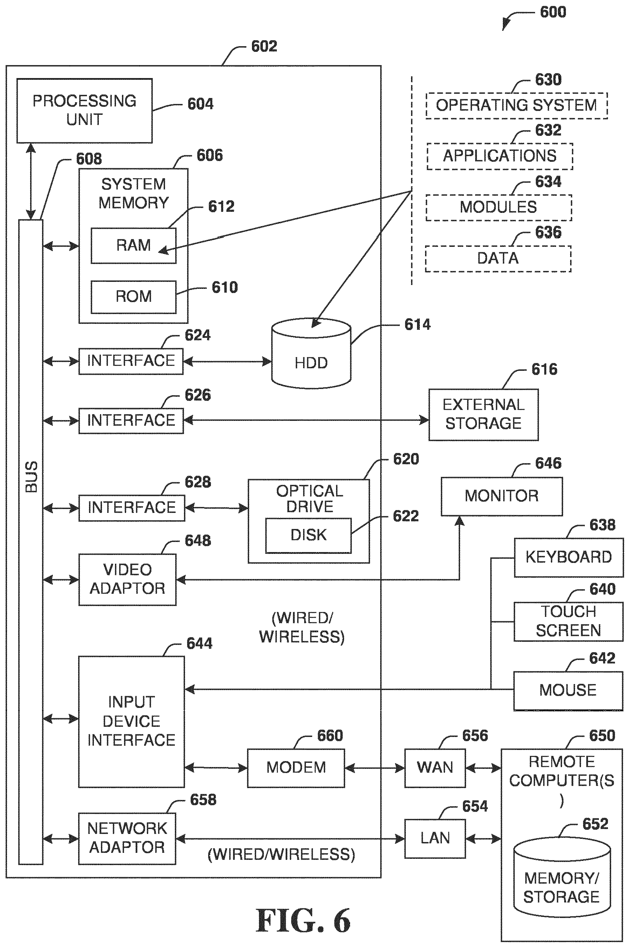

FIG. 6 illustrates a block diagram of an example, non-limiting computing environment 600 in which one or more embodiments described herein can be facilitated. The example environment 600 for implementing various embodiments of the aspects described herein includes a computer 602, the computer 602 including a processing unit 604, a system memory 606 and a system bus 608. The system bus 608 couples system components including, but not limited to, the system memory 606 to the processing unit 604. The processing unit 604 can be any of various commercially available processors. Dual microprocessors and other multi-processor architectures can also be employed as the processing unit 604.

The system bus 608 can be any of several types of bus structure that can further interconnect to a memory bus (with or without a memory controller), a peripheral bus, and a local bus using any of a variety of commercially available bus architectures. The system memory 606 includes ROM 610 and RAM 612. A basic input/output system (BIOS) can be stored in a nonvolatile memory such as ROM, erasable programmable read only memory (EPROM), EEPROM, which BIOS contains the basic routines that help to transfer information between elements within the computer 602, such as during startup. The RAM 612 can also include a high-speed RAM such as static RAM for caching data.

The computer 602 further includes an internal hard disk drive (HDD) 614 (e.g., EIDE, SATA), one or more external storage devices 616 (e.g., a magnetic floppy disk drive (FDD) 616, a memory stick or flash drive reader, a memory card reader, etc.) and an optical disk drive 620 (e.g., which can read or write from a CD-ROM disc, a DVD, a BD, etc.). While the internal HDD 614 is illustrated as located within the computer 602, the internal HDD 614 can also be configured for external use in a suitable chassis (not shown). Additionally, while not shown in environment 600, a solid-state drive (SSD) could be used in addition to, or in place of, an HDD 614. The HDD 614, external storage device(s) 616 and optical disk drive 620 can be connected to the system bus 608 by an HDD interface 624, an external storage interface 626 and an optical drive interface 628, respectively. The interface 624 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 602, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 612, including an operating system 630, one or more application programs 632, other program modules 634 and program data 636. All or portions of the operating system, applications, modules, and/or data can also be cached in the RAM 612. The systems and methods described herein can be implemented utilizing various commercially available operating systems or combinations of operating systems.

Computer 602 can optionally comprise emulation technologies. For example, a hypervisor (not shown) or other intermediary can emulate a hardware environment for operating system 630, and the emulated hardware can optionally be different from the hardware illustrated in FIG. 6. In such an embodiment, operating system 630 can comprise one virtual machine (VM) of multiple VMs hosted at computer 602. Furthermore, operating system 630 can provide runtime environments, such as the Java runtime environment or the .NET framework, for applications 632. Runtime environments are consistent execution environments that allow applications 632 to run on any operating system that includes the runtime environment. Similarly, operating system 630 can support containers, and applications 632 can be in the form of containers, which are lightweight, standalone, executable packages of software that include, e.g., code, runtime, system tools, system libraries and settings for an application.

Further, computer 602 can be enable with a security module, such as a trusted processing module (TPM). For instance, with a TPM, boot components hash next in time boot components, and wait for a match of results to secured values, before loading a next boot component. This process can take place at any layer in the code execution stack of computer 602, e.g., applied at the application execution level or at the operating system (OS) kernel level, thereby enabling security at any level of code execution.

A user can enter commands and information into the computer 602 through one or more wired/wireless input devices, e.g., a keyboard 638, a touch screen 640, and a pointing device, such as a mouse 642. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 604 through an input device interface 644 that can be coupled to the system bus 608, but can be connected by other interfaces, such as a parallel port, an IEEE 1394 serial port, a game port, a USB port, an IR interface, a BLUETOOTH^{®} interface, etc.

A monitor 646 or other type of display device can be also connected to the system bus 608 via an interface, such as a video adapter 648. In addition to the monitor 646, a computer typically includes other peripheral output devices (not shown), such as speakers, printers, etc.

The computer 602 can operate in a networked environment using logical connections via wired and/or wireless communications to one or more remote computers, such as a remote computer(s) 650. The remote computer(s) 650 can be a workstation, a server computer, a router, a personal computer, portable computer, microprocessor-based entertainment appliance, a peer device or other common network node, and typically includes many or all of the elements described relative to the computer 602, although, for purposes of brevity, only a memory/storage device 652 is illustrated. The logical connections depicted include wired/wireless connectivity to a local area network (LAN) 654 and/or larger networks, e.g., a wide area network (WAN) 656. Such LAN and WAN networking environments are commonplace in offices and companies, and facilitate enterprise-wide computer networks, such as intranets, all of which can connect to a global communications network, e.g., the Internet.

When used in a LAN networking environment, the computer 602 can be connected to the local network 654 through a wired and/or wireless communication network interface or adapter 658. The adapter 658 can facilitate wired or wireless communication to the LAN 654, which can also include a wireless access point (AP) disposed thereon for communicating with the adapter 658 in a wireless mode.

When used in a WAN networking environment, the computer 602 can include a modem 660 or can be connected to a communications server on the WAN 656 via other means for establishing communications over the WAN 656, such as by way of the Internet. The modem 660, which can be internal or external and a wired or wireless device, can be connected to the system bus 608 via the input device interface 644. In a networked environment, program modules depicted relative to the computer 602 or portions thereof, can be stored in the remote memory/storage device 652. It will be appreciated that the network connections shown are example and other means of establishing a communications link between the computers can be used.

When used in either a LAN or WAN networking environment, the computer 602 can access cloud storage systems or other network-based storage systems in addition to, or in place of, external storage devices 616 as described above. Generally, a connection between the computer 602 and a cloud storage system can be established over a LAN 654 or WAN 656 e.g., by the adapter 658 or modem 660, respectively. Upon connecting the computer 602 to an associated cloud storage system, the external storage interface 626 can, with the aid of the adapter 658 and/or modem 660, manage storage provided by the cloud storage system as it would other types of external storage. For instance, the external storage interface 626 can be configured to provide access to cloud storage sources as if those sources were physically connected to the computer 602.

The computer 602 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

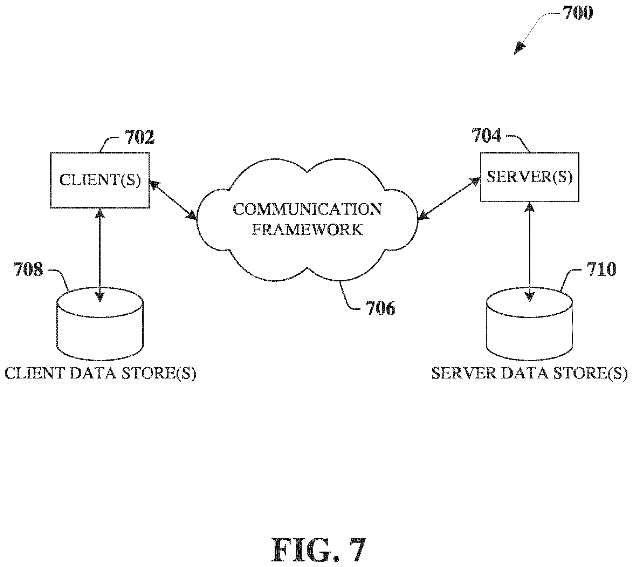

FIG. 7 illustrates a schematic block diagram of a computing environment 700 in accordance with this specification. The system 700 includes one or more client(s) 702, (e.g., computers, smart phones, tablets, cameras, PDA's). The client(s) 702 can be hardware and/or software (*e.g*., threads, processes, computing devices). The client(s) 702 can house cookie(s) and/or associated contextual information by employing the specification, for example.

The system 700 also includes one or more server(s) 704. The server(s) 704 can also be hardware or hardware in combination with software (*e.g*., threads, processes, computing devices). The servers 704 can house threads to perform transformations of media items by employing aspects of this disclosure, for example. One possible communication between a client 702 and a server 704 can be in the form of a data packet adapted to be transmitted between two or more computer processes wherein data packets can include coded analyzed headspaces and/or input. The data packet can include a cookie and/or associated contextual information, for example. The system 700 includes a communication framework 706 (*e.g.,* a global communication network such as the Internet) that can be employed to facilitate communications between the client(s) 702 and the server(s) 704.

Communications can be facilitated *via* a wired (including optical fiber) and/or wireless technology. The client(s) 702 are operatively connected to one or more client data store(s) 708 that can be employed to store information local to the client(s) 702 (*e.g.,* cookie(s) and/or associated contextual information). Similarly, the server(s) 704 are operatively connected to one or more server data store(s) 710 that can be employed to store information local to the servers 704.

In one exemplary implementation, a client 702 can transfer an encoded file, (e.g., encoded media item), to server 704. Server 704 can store the file, decode the file, or transmit the file to another client 702. It is to be appreciated, that a client 702 can also transfer uncompressed file to a server 704 and server 704 can compress the file and/or transform the file in accordance with this disclosure. Likewise, server 704 can encode information and transmit the information via communication framework 706 to one or more clients 702.

The present invention may be a system, a method, an apparatus and/or a computer program product at any possible technical detail level of integration. The computer program product can include a computer readable storage medium (or media) having computer readable program instructions thereon for causing a processor to carry out aspects of the present invention. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the present invention can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions can also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks. The computer readable program instructions can also be loaded onto a computer, other programmable data processing apparatus, or other device to cause a series of operational acts to be performed on the computer, other programmable apparatus, or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer and/or computers, those skilled in the art will recognize that this disclosure also can or can be implemented in combination with other program modules. Generally, program modules include routines, programs, components, data structures, etc. that perform particular tasks and/or implement particular abstract data types. Moreover, those skilled in the art will appreciate that the inventive computer-implemented methods can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices. For example, in one or more embodiments, computer executable components can be executed from memory that can include or be comprised of one or more distributed memory units. As used herein, the term "memory" and "memory unit" are interchangeable. Further, one or more embodiments described herein can execute code of the computer executable components in a distributed manner, e.g., multiple processors combining or working cooperatively to execute code from one or more distributed memory units. As used herein, the term "memory" can encompass a single memory or memory unit at one location or multiple memories or memory units at one or more locations.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches, and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random-access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but one of ordinary skill in the art can recognize that many further combinations and permutations of this disclosure are possible. Furthermore, to the extent that the terms "includes," "has," "possesses," and the like are used in the detailed description, claims, appendices, and drawings such terms are intended to be inclusive in a manner similar to the term "comprising" as "comprising" is interpreted when employed as a transitional word in a claim.

The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Further aspects of the invention are provided by the subject matter of the following clauses:
1. A system, comprising:
   a memory that stores computer executable components; and
   a processor that executes the computer executable components stored in the memory, wherein the computer executable components comprise:
      a threshold component that updates a count of a plurality of pixel counters based on confidence scores of at least one camera and at least one sensor in a single pixel, wherein the confidence scores are indicative of confidences associated with a probability map of a free space detection;
      a pixel fusion component that performs sensor fusion on the confidence scores based on a determination that the count of the plurality of pixel counters is less than a defined threshold; and a frame control component that bypasses the sensor fusion on the confidence scores based on a determination that the count of the plurality of pixel counters is greater than a defined threshold.
2. The system of clause 1, wherein the computer executable components further comprise the plurality of pixel counters, wherein the plurality of pixel counters filters the confidence scores of the at least one camera and the at least one sensor based on a confidence range to determine whether to update the count of the plurality of pixel counters and wherein the confidence range filters the confidence scores based on a free space limit or an occupied limit.
3. The system of clause 2, wherein the confidence scores of the at least one camera and at least one sensor are greater than the free space limit, a first pixel counter increases.
4. The system of clause 2, wherein the confidence scores of the at least one camera and at least one sensor are less than the occupied limit, a second pixel counter increases.
5. The system of clause 1, further comprising the at least one camera and the at least one sensor, wherein the at least one sensor is selected from a group consisting of ultrasonic sensor, RADAR sensor, LIDAR sensor, or infrared sensor.
6. The system of clause 1, wherein the computer executable components further comprise:
   a masking component that generates the confidence scores of the at least one camera and the at least one sensor from binary masks of camera data and sensed data, wherein the at least one camera and the at least one sensor generate the camera data and the sensed data, respectively.
7. The system of clause 1, wherein the computer executable components further comprise:
   an update pixel component that fuses two or more of the confidence scores into a new confidence score of the single pixel.
8. The system of clause 1, further comprising a vehicle, and wherein the threshold component, the pixel fusion component and the frame control component are operatively coupled to the vehicle to facilitate free space detection for reduction of collisions by the vehicle.
9. A computer-implemented method comprising:
   updating, by a system operatively coupled to a processor, a count of a plurality of pixel counters based on confidence scores of at least one camera and at least one sensor in a single pixel, wherein the confidence scores are indicative of confidences associated with a probability map of a free space detection;
   performing, by the system, sensor fusion on the confidence scores based on a determination that the count of the plurality of pixel counters is less than a defined threshold; and bypassing, by the system, the sensor fusion on the confidence scores based on a determination that the count of the plurality of pixel counters is greater than a defined threshold.
10. The computer-implemented method of clause 9, wherein the plurality of pixel counters filters the confidence scores of the at least one camera and the at least one sensor based on a confidence range to determine whether to update the count of the plurality of pixel counters and wherein the confidence range filters the confidence scores based on a free space limit or an occupied limit.
11. The computer-implemented method of clause 10, wherein the confidence scores of the at least one camera and the at least one sensor are greater than the free space limit, a first pixel counter increases.
12. The computer-implemented method of clause 10, wherein the confidence scores of the at least one camera and the at least one sensor are less than the occupied limit, a second pixel counter increases.
13. The computer-implemented method of clause 9, further comprising:
   generating, by the system, the confidence scores of the at least one camera and the at least one sensor from binary masks of camera data and sensed data, wherein the at least one camera and the at least one sensor generate the camera data and the sensed data, respectively.
14. The computer-implemented method of clause 9, further comprising:
   fusing, by the system, two or more of the confidence scores into a new confidence score of the single pixel.
15. A computer program product facilitating a process to perform sensor fusion for free space detection, the computer program product comprising a computer readable storage medium having program instructions embodied therewith, the program instructions executable by a processor to cause the processor to:
   update, by the processor, a count of a plurality of pixel counters based on confidence scores of at least one camera and at least one sensor in a single pixel, wherein the confidence scores are indicative of confidences associated with a probability map of a free space detection;
   perform, by the processor, sensor fusion on the confidence scores based on a determination that the count of the plurality of pixel counters is less than a defined threshold; and bypass, by the processor, the sensor fusion on the confidence scores based on a determination that the count of the plurality of pixel counters is greater than a defined threshold.
16. The computer program product of clause 15, wherein the plurality of pixel counters filters the confidence scores of the at least one camera and the at least one sensor based on a confidence range to determine whether to update the count of the plurality of pixel counters and wherein the confidence range filters the confidence scores based on a free space limit or an occupied limit.
17. The computer program product of clause 16, wherein the confidence scores of the at least one camera and at least one sensor are greater than the free space limit, a first pixel counter increases.
18. The computer program product of clause 16, wherein the confidence scores of the at least one camera and at least one sensor are less than the occupied limit, a second pixel counter increases.
19. The computer program product of clause 15, wherein the program instructions are further executable by the processor to cause the processor to:
   generate, by the processor, the confidence scores of the at least one camera and the at least one sensor from binary masks of camera data and sensed data, wherein the at least one camera and the at least one sensor generate the camera data and the sensed data, respectively.
20. The computer program product of clause 15, wherein the program instructions are further executable by the processor to cause the processor to:
   fuse, by the processor, two or more of the confidence scores into a new confidence score of the single pixel.

## Claims

1. A system, comprising:
a memory that stores computer executable components; and
a processor that executes the computer executable components stored in the memory, wherein the computer executable components comprise:
a threshold component that updates a count of a plurality of pixel counters based on confidence scores of at least one camera and at least one sensor in a single pixel, wherein the confidence scores are indicative of confidences associated with a probability map of a free space detection;
a pixel fusion component that performs sensor fusion on the confidence scores based on a determination that the count of the plurality of pixel counters is less than a defined threshold; and
a frame control component that bypasses the sensor fusion on the confidence scores based on a determination that the count of the plurality of pixel counters is greater than a defined threshold.

2. The system of claim 1, wherein the computer executable components further comprise the plurality of pixel counters, wherein the plurality of pixel counters filters the confidence scores of the at least one camera and the at least one sensor based on a confidence range to determine whether to update the count of the plurality of pixel counters and wherein the confidence range filters the confidence scores based on a free space limit or an occupied limit.

3. The system of claim 2, wherein the confidence scores of the at least one camera and at least one sensor are greater than the free space limit, a first pixel counter increases.

4. The system of claim 2, wherein the confidence scores of the at least one camera and at least one sensor are less than the occupied limit, a second pixel counter increases.

5. The system of claim 1, further comprising the at least one camera and the at least one sensor, wherein the at least one sensor is selected from a group consisting of ultrasonic sensor, RADAR sensor, LIDAR sensor, or infrared sensor.

6. The system of claim 1, wherein the computer executable components further comprise:
a masking component that generates the confidence scores of the at least one camera and the at least one sensor from binary masks of camera data and sensed data, wherein the at least one camera and the at least one sensor generate the camera data and the sensed data, respectively.

7. The system of claim 1, wherein the computer executable components further comprise:
an update pixel component that fuses two or more of the confidence scores into a new confidence score of the single pixel.

8. The system of claim 1, further comprising a vehicle, and wherein the threshold component, the pixel fusion component and the frame control component are operatively coupled to the vehicle to facilitate free space detection for reduction of collisions by the vehicle.

9. A computer-implemented method comprising:
updating, by a system operatively coupled to a processor, a count of a plurality of pixel counters based on confidence scores of at least one camera and at least one sensor in a single pixel, wherein the confidence scores are indicative of confidences associated with a probability map of a free space detection;
performing, by the system, sensor fusion on the confidence scores based on a determination that the count of the plurality of pixel counters is less than a defined threshold; and
bypassing, by the system, the sensor fusion on the confidence scores based on a determination that the count of the plurality of pixel counters is greater than a defined threshold.

10. The computer-implemented method of claim 9, wherein the plurality of pixel counters filters the confidence scores of the at least one camera and the at least one sensor based on a confidence range to determine whether to update the count of the plurality of pixel counters and wherein the confidence range filters the confidence scores based on a free space limit or an occupied limit.

11. The computer-implemented method of claim 9, further comprising:
generating, by the system, the confidence scores of the at least one camera and the at least one sensor from binary masks of camera data and sensed data, wherein the at least one camera and the at least one sensor generate the camera data and the sensed data, respectively.

12. The computer-implemented method of claim 9, further comprising:
fusing, by the system, two or more of the confidence scores into a new confidence score of the single pixel.

13. A computer program product facilitating a process to perform sensor fusion for free space detection, the computer program product comprising a computer readable storage medium having program instructions embodied therewith, the program instructions executable by a processor to cause the processor to:
update, by the processor, a count of a plurality of pixel counters based on confidence scores of at least one camera and at least one sensor in a single pixel, wherein the confidence scores are indicative of confidences associated with a probability map of a free space detection;
perform, by the processor, sensor fusion on the confidence scores based on a determination that the count of the plurality of pixel counters is less than a defined threshold; and
bypass, by the processor, the sensor fusion on the confidence scores based on a determination that the count of the plurality of pixel counters is greater than a defined threshold.

14. The computer program product of claim 13, wherein the program instructions are further executable by the processor to cause the processor to:
generate, by the processor, the confidence scores of the at least one camera and the at least one sensor from binary masks of camera data and sensed data, wherein the at least one camera and the at least one sensor generate the camera data and the sensed data, respectively.

15. The computer program product of claim 13, wherein the program instructions are further executable by the processor to cause the processor to:
fuse, by the processor, two or more of the confidence scores into a new confidence score of the single pixel.
